(19) **Europäisches Patentamt**

**European Patent Office**

**Office européen des brevets**

(11) **EP 1 002 716 B1**

(12) **FASCICULE DE BREVET EUROPEEN**

(45) Date de publication et mention
de la délivrance du brevet:
**24.08.2005 Bulletin 2005/34**

(51) Int Cl.$^7$: **B64G 1/28**, G05D 1/08

(21) Numéro de dépôt: **99401843.0**

(22) Date de dépôt: **21.07.1999**

(54) **Procédé et dispositif de pilotage de l'attitude d'un satellite**

Methode und Vorrichtung zur Lageregelung eines Satelliten

Method and device for the attitude control of a satellite

(84) Etats contractants désignés:
**BE DE ES GB IT SE**

(30) Priorité: **19.11.1998 FR 9814548**

(43) Date de publication de la demande:
**24.05.2000 Bulletin 2000/21**

(60) Demande divisionnaire:
**04076876.4 / 1 484 247**

(73) Titulaire: **EADS ASTRIUM SAS**
**78140 Velizy-Villacoublay (FR)**

(72) Inventeurs:
• **Defendini, Ange**
**31380 Montjoire (FR)**
• **Lagadec, Kristen**
**31400 Toulouse (FR)**

(74) Mandataire: **Loisel, Bertrand et al**
**Cabinet Plasseraud**
**65/67 rue de la Victoire**
**75440 Paris Cedex 09 (FR)**

(56) Documents cités:
US-A- 4 573 651    US-A- 5 441 222
US-A- 5 692 707

• H.S. OH AND S.R. VADALI: "Feedback Control
and Steering Laws for Spacecraft Using single
Gimbal Control Moment Gyros" JOURNAL OF
THE ASTRONAUTICAL SCIENCES, vol. 39, no. 2,
avril 1991 (1991-04) - juin 1991 (1991-06), pages
183-203, XP002112652 USA

• S. R. VADALI ET AL.: "Suboptimal Command
Generation for Control Moment Gyroscopes and
Feedback Control of Spacecraft" JOURNAL OF
GUIDANCE, CONTROL AND DYNAMICS, vol. 18,
no. 6, novembre 1995 (1995-11) - décembre 1995
(1995-12), pages 1350-1354, XP000558647
Washington, DC, US

• HARUHISA KUROKAWA: "Constrained Steering
Law of Pyramid-Type Control Moment Gyros and
Ground Tests" JOURNAL OF GUIDANCE,
CONTROL AND DYNAMICS, vol. 20, no. 3, mai
1997 (1997-05) - juin 1997 (1997-06), pages
445-449, XP002112653 Washington, DC, US

• JUN'ICHIRO KAWAGUCHI ET AL.: "Closed Loop
Momentum Transfer Maneuvers Using
Multiwheels" JOURNAL OF GUIDANCE,
CONTROL AND DYNAMICS, vol. 18, no. 4, juillet
1995 (1995-07) - août 1995 (1995-08), pages
867-874, XP000558528 Washington, DC, US

• JOSEPH A. PARADISO: "Global Steering of
Single Gimballed Control Moment Gyroscopes
Using a Directional Search" JOURNAL OF
GUIDANCE, CONTROL AND DYNAMICS, vol. 15,
no. 5, septembre 1992 (1992-09) - octobre 1992
(1992-10), pages 1236-1244, XP002112654
Washington, DC, US

• VADALI S.R.; OH H.; WALKER S.: 'Preferred
Gimbal Angles for Single Gimbal Control
Moment Gyroscopes' JOURNAL OF GUIDANCE,
CONTROL, AND DYNAMICS vol. 13, no. 6, pages
1090 - 1095

**Description**

La présente invention concerne les procédés et dispositifs de pilotage d'attitude de satellite par commande d'orientation de l'axe de rotation de la toupie des gyrodynes d'une grappe de gyrodynes montée dans le satellite.

Un exemple de commande d'attitude est donné dans l'article de VADALI AND KRISHNAN "Suboptimal Command Generation for Control Moment Gyroscopes and Feedback Control of Spacecraft" JOURNAL OF GUIDANCE, CONTROL AND DYNAMICS, vol. 18, no. 6, 1995, pages 1350-1354, ou dans l'article de VADALI, OH AND WALKER "Preferred Gimbal Angles for Single Gimbal Control Moment Gyroscopes" JOURNAL OF GUIDANCE, CONTROL, AND DYNAMICS, vol. 13, no. 6, 1990, pages 1090-1095.

Las gyrodynes ou actionneurs gyroscopiques (désignés souvent par le sigle anglo-saxon cmg) se différencient des roues de réaction, couramment utilisées pour commander l'attitude d'un satellite par échange de moment cinétique, en ce qu'ils sont montés sur un support, appelé cardan, orientable par au moins un moteur autour d'au moins un axe orthogonal à l'axe de rotation de la toupie. Dans la plupart des cas les toupies sont entraînées à vitesse constante ou du moins peu variable lors de leur mise en oeuvre.

Une grappe de gyrodynes doit comporter au moins trois gyrodynes pour permettre de réorienter un trièdre de référence liée au satellite dans toutes les attitudes et au moins deux gyrodynes pour un pilotage 2 axes. En pratique on utilise au moins quatre gyrodynes en grappe pour assurer une redondance.

La grappe de gyrodynes constitue un actionneur inertiel dont la commande permet d'appliquer un couple donnant à la plate-forme du satellite un profil de vitesses angulaires spécifié, généralement par téléchargement à partir du sol. Le couple est généré par mise en vitesse de l'axe cardan de façon à faire précessionner la toupie. Pour la toupie d'ordre i, le couple $C_i$ du à l'effet gyroscopique est donné par :

$$C_i = h_i \cdot \frac{d\sigma_i}{dt}$$

où $h_i$ désigne le moment cinétique de la toupie d'ordre i, et $\sigma_i$ désigne l'angle cardan du gyrodyne d'ordre i.

Un satellite comporte généralement un système de commande d'attitude qui reçoit des signaux d'entrée de capteurs permettant de déterminer sa position angulaire dans un repère inertiel. Ce système, qui a généralement une constante de temps relativement longue, permet de maintenir le satellite dans une attitude de consigne en commandant les moteurs des roues de réaction, ou ceux des cardans lorsque le satellite est muni de gyrodynes.

Dans le cas, considéré ici, du contrôle d'attitude à l'aide d'une grappe de gyrodynes, le système de commande détermine d'abord le couple à appliquer et doit en déduire une vitesse à appliquer aux cardans des gyrodynes. Les positions angulaires des cardans varient au cours du temps. La capacité de fourniture du couple total C est en conséquence non stationnaire et non linéaire. Elle peut s'écrire, sous forme matricielle :

$$C = A(\sigma) \cdot \frac{d\sigma}{dt} \qquad (1)$$

où A est la matrice jacobienne $a_{ij} = \partial H_i/\partial \sigma_j$, avec i=1 à 3 et j=1 à 4 (ou plus généralement j=1 un au nombre de gyrodynes), $H_i$ désignant la composante d'ordre i du moment cinétique total de la grappe, et $\sigma_j$ la position angulaire du cardan du gyrodyne d'ordre j.

Une méthode classique de guidage consiste, connaissant le couple C à fournir, à inverser la relation (1) pour obtenir les vitesses $\frac{d\sigma_c}{dt}$ de consigne à donner aux gyrodynes. Certaines missions prévoient des modifications importantes d'attitude du satellite dans des délais courts. Les gyrodynes sont particulièrement adaptés à ces missions « agiles ». A l'heure actuelle, on utilise essentiellement deux méthodes pour déterminer le profil de vitesses à imposer aux supports des gyrodynes.

Suivant un premier procédé, qu'on peut qualifier de guidage local, on calcule à chaque demande de couple, la vitesse angulaire requise pour chaque support par la formule (2) ce qui revient à une pseudo-inversion de la Jacobienne. La contrainte imposée pour tenir compte de la redondance est la recherche d'un mouvement à énergie minimale.

$$\frac{d\sigma_c}{dt} = [A' \, (A.A')^{-1}] \, C \qquad (2)$$

L'expérience a montré que cette approche conduit souvent à délaisser un gyrodyne dont la réorientation vers la direction requise demande trop de vitesse à tous les supports, avec le résultat que finalement la grappe comporte une toupie « dormante », tandis que toutes les autres se regroupent dans une direction opposée. La grappe est alors dans une configuration singulière : le moment cinétique est maximum dans cette direction opposée et il est impossible d'obtenir un couple selon cette direction.

Il existe des algorithmes d'évitement local des singularités par des mises en vitesse des cardans, telles que le couple total résultant soit nul. Mais ces algorithmes sont peu efficaces, car l'approche de la singularité est détectée tardivement faute de prédictions sur le profil de couple à suivre. On est en conséquence conduit à surdimensionner la capacité de la grappe, afin de s'affranchir de la plupart des singularités.

Une autre approche, qu'on peut qualifier de guidage global continu, implique de calculer, avant le début de la manoeuvre de changement d'attitude du satellite, la meilleure trajectoire de reconfiguration de grappe σ(t) pendant toute la manoeuvre, afin d'éviter de passer à proximité d'une configuration singulière. Une telle commande d'attitude est connue de XP001024700. Ce calcul est très lourd. Il doit être fait au sol, puis téléchargé.

La présente invention vise à fournir un procédé permettant, dans le pilotage de l'attitude par gyrodynes, de s'affranchir du problème des singularités, tout en limitant la charge de calcul associée. L'invention permet alors d'exploiter l'intégralité de la capacité de la grappe pour les basculements de l'attitude du satellite.

Pour cela, l'invention utilise notamment le fait que la capacité de couple d'un gyrodyne n'est limitée que par la vitesse de rotation maximale du moteur d'entraînement du cardan. L'invention utilise également la constatation qu'il est possible de passer transitoirement dans une configuration singulière, à condition que ce soit au cours de la reconfiguration de la grappe de gyrodynes vers une consigne prédéterminée et alors que les cardans sont animés d'une vitesse angulaire importante.

En conséquence l'invention propose un procédé de pilotage de l'attitude d'un satellite, par commande d'une des gyrodynes d'une grappe (généralement d'au moins quatre gyrodynes), ayant des toupies respectives montées sur des cardans montés rotatifs sur une plateforme du satellite, autour d'axes d'orientations différentes, suivant la revendication 1.

Il est avantageux de provoquer une montée en vitesse des moteurs d'entraînement des cardans dans le temps minimum compatible avec la tenue des gyrodynes, puis un palier de vitesse et un retour à zéro de la vitesse.

L'invention permet aussi de réduire la durée des basculements par la réduction des phases d'accélération et de décélération angulaires de début et de fin de manoeuvre. Pratiquement, la montée en vitesse sera quasi-instantanée en regard du temps de réponse de l'asservissement de système de contrôle d'attitude. Le moment cinétique interne est réorienté dans la direction adéquate pour obtenir le profil de vitesse et d'attitude du satellite recherché avant que ce système n'intervienne.

L'existence d'une redondance permet de disposer d'un degré de liberté dans le choix de la configuration de grappe en basculement. Il sera souvent avantageux de choisir, parmi les critères de choix, l'un des suivants :

- Racine carrée du déterminant de (AA') maximal, ce qui revient à une maximisation de la marge par rapport aux singularités ;
- Minimisation de la norme infinie du vecteur s, où le vecteur s est le vecteur des normes des lignes de A' $(A.A)^{-1}$, ce qui correspond au maximum de la gouvernabilité en couple 3-axes de la configuration d'arrivée ;

- Norme infinie de σ minimale, ce qui correspond à un minimum du temps de reconfiguration de grappe ;
- Norme 2 de σ minimale (reconfiguration à énergie minimale).

Le procédé permet en outre de prendre en compte une contrainte de domaine angulaire d'orientation de chaque support en limitant le domaine à une plage déterminée, par exemple de 360°, on peut ainsi éviter des liaisons par bagues et balais et utiliser des câbles pour le passage de la puissance et des signaux.

La configuration d'arrivée des supports étant éloignée des singularités, le système de contrôle d'attitude peut compenser les erreurs résiduelles d'attitude et de vitesse du satellite par la loi d'inversion de la Jacobienne évoquée précédemment.

Après quelques manoeuvres, les excursions des positions angulaires des supports autour de la configuration de consigne restent limitées ; des désaturations en période de veille permettent de ramener la grappe en configuration canonique.

L'invention propose également un dispositif de pilotage d'attitude suivant la revendication 10.

Dans un tel dispositif, il est possible de borner le domaine de débattement angulaire de l'axe cardan d'un gyrodyne 1-axe (par exemple à ± ½ tour) . Dans un tel dispositif on peut utiliser un gyrodyne de petite taille, peu encombrant, capable de fournir des couples suffisants pour provoquer des manoeuvres rapides de satellites de classes intermédiaires, dont la toupie comprend deux flasques reliées par un arbre de diamètre très inférieur à celui des flasques et dont le support comporte des moyens dans lesquels tourne l'arbre.

Les caractéristiques ci-dessus ainsi que d'autres apparaîtront mieux à la lecture de la description qui suit d'un mode particulier de réalisation de l'invention, donné à titre non limitatif. La description se réfère aux dessins qui l'accompagnent, dans lesquels :

- la figure 1 est un schéma en perspective montrant une disposition possible de quatre gyrodynes 1-axe d'une grappe, en position canonique ;
- les figures 2A et 2B montrent la variation dans le temps du couple appliqué par un gyrodyne et un moment cinétique H échangé avec la plate-forme, pour plusieurs profils de mise en vitesse ;
- la figure 3 montre un gyrodyne utilisable dans un dispositif suivant l'invention.

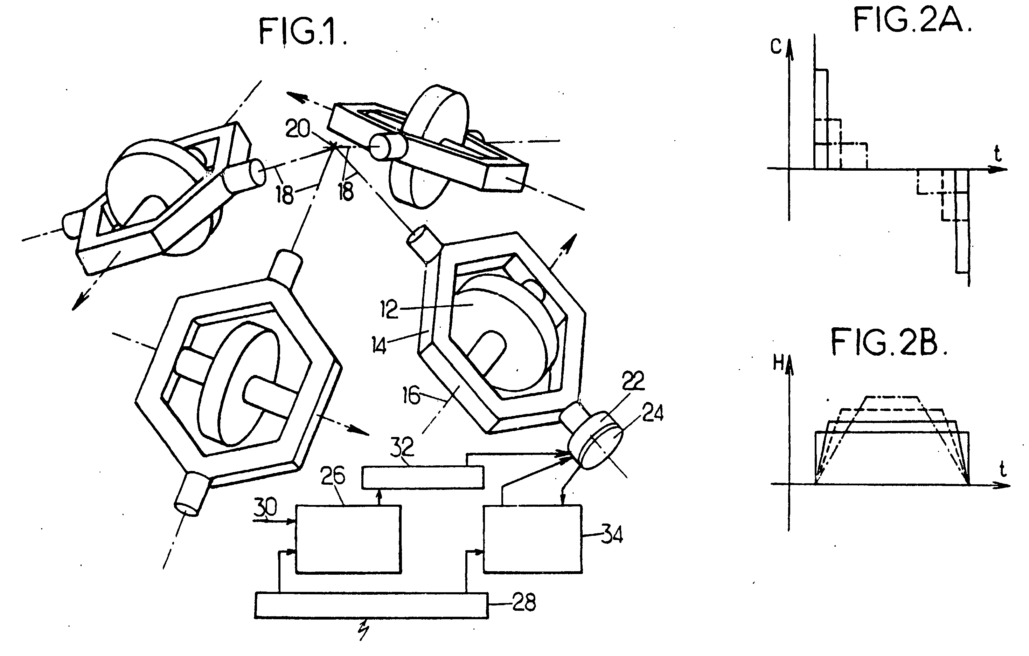

La figure 1 montre une grappe de quatre gyrodynes 10a, 10b, 10c, 10d identiques, ayant chacun une toupie 12 montée sur un cardan 14 de façon à pouvoir tourner autour d'un axe 16. Un moteur non représenté maintient la toupie en rotation, généralement à vitesse constante. Chaque cardan est monté sur la plate-forme du satellite (non représentée) de façon à pouvoir tourner autour d'un axe 18 orthogonal à l'axe 16. Les axes 18 ont des orientations différentes. Dans le cas représenté, ils occupent les arêtes d'une pyramide régulière de sommet 20.

Chacun des cardans est muni d'un moteur 22, dont un seul est représenté, permettant de le faire tourner autour de l'axe 18 respectif. Un capteur angulaire 24 donne une information sur l'orientation du cardan et donc du plan de la roue 12.

Le maintien du satellite dans une attitude de consigne dans un repère inertiel est assuré par un système de commande d'attitude qui peut être d'un type connu. Il comporte un organe 26 de calcul et de commande du moteur 22 qui reçoit des consignes d'orientation d'un émetteur-récepteur 28 de liaison avec le sol et des signaux 30 provenant de capteurs non représentés, tels que capteurs d'étoile et d'horizon terrestre, etc... Cet organe commande des circuits de puissance 32 alimentant les moteurs. Ce système a généralement une constante de temps relativement longue, de quelques secondes à plusieurs dizaines de secondes.

Le dispositif comporte également des moyens de commande supplémentaires 34 dans lequel des positions finales à donner aux cardans des gyrodynes sont téléchargées pour provoquer une manoeuvre de réorientation du satellite. Comme il a été indiqué plus haut, cette position finale de tous les gyrodynes est évaluée en partant de l'hypothèse que la reconfiguration sera terminée avant que le système de contrôle d'attitude n'intervienne pour annuler la différence entre l'attitude réelle et l'attitude de consigne du satellite dans un repère inertiel.

La reconfiguration de la grappe s'effectue par réorientation quasi-instantanée et indépendante des axes de toupie, et non pas par suivi pas à pas d'une trajectoire continue prédéterminée.

La configuration initiale est non-singulière et la configuration finale est calculée pour être non-singulière également. Les configurations intermédiaires sont tellement transitoires qu'une improbable perte de rang de la Jacobienne passe virtuellement inaperçue du système de contrôle d'attitude 26.

Il n'est alors plus nécessaire de surdimensionner la capacité de contrôle de la grappe pour éviter les singularités. On peut utiliser l'intégralité de la capacité de moment cinétique de la grappe pour réaliser les manoeuvres. Une partie de la marge gagnée peut être réservée pour dégager du temps pour les transitoires de tranquillisation et d'affinage du pointage en axes inertiels en fin de basculement.

La diminution des vitesses crête de basculement obtenue grâce à la réduction de la durée des phases d'accélération et de décélération apparaît sur les figures 2A et 2B.

En adoptant un couple élevé, on donne au profil de vitesse, reproduit par le profil de moments cinétiques, une forme rectangulaire (lignes en traits pleins sur les figures 2A et 2B).

La capacité de moment cinétique maximal requise de la grappe pour provoquer l'échange de moment cinétique global est jusqu'à deux fois moindre que dans le cas du couple faible représenté par une ligne en traits mixtes. Or, la capacité de moment cinétique est un facteur essentiel de dimensionnement de la grappe (masse, dimensions et vitesse de rotation des toupies), alors que la capacité de couple d'un gyrodyne n'est limitée que par la vitesse de rotation maximale du moteur de cardan.

Il est en conséquence avantageux de rechercher un profil de moment cinétique rectangulaire ou trapézoïdal de moments cinétiques, avec un long palier constant. Les réglages des pentes de départ et d'arrivée assurent la continuité du profil par rapport aux conditions initiales et finales de vitesse angulaire spécifiée.

Dans le cas extrême d'un profil rectangulaire, le guidage de la grappe est très simplifié, puisqu'il suffit de calculer une configuration a de consigne pour la grappe telle que $H(\sigma) = I_{sat}\Omega_{sat}$ ($\Omega_{sat}$ étant la vitesse angulaire) au lieu d'une trajectoire continue $\sigma(t)$.

Pour cela, une consigne de position est envoyée en boucle ouverte à chaque moteur au début de chaque manoeuvre. L'asservissement en position utilise un codeur angulaire et réoriente le cardan au plus vite ; la seule limite est la bande passante du contrôle des moteurs de cardan et leur vitesse maximale.

Le moment cinétique interne est réorienté de façon quasi-instantanée en regard des temps de réponse de l'asservissement de contrôle d'attitude. Si nécessaire, le système de contrôle d'attitude peut être mis hors service pendant la reconfiguration de grappe ou sa commande de couple limitée à une valeur très inférieure à la capacité des gyrodynes. Pour cela, on peut utiliser des techniques de saturation ou de filtrage. Les moteurs des cardans peuvent être du type pas à pas. On supprime ainsi la boucle d'asservissement en position, puisque le moteur pas à pas est directement commandé en position. Le contrôle fin des microperturbations et des dépointages peut alors être assuré non pas par de petites réorientations des axes cardans, mais par l'accélération ou la décélération des toupies d'inertie, le système s'apparentant alors à une gerbe instationnaire de roues de réaction.

Une fois la grappe reconfigurée, le satellite est animé de la bonne vitesse autour de l'axe choisi, aux incertitudes sur les inerties et les alignements près.

Comme la reconfiguration n'est pas strictement instantanée, il se crée une erreur d'attitude par rapport au profil théorique de consigne. Le système de contrôle d'attitude doit annuler cette erreur.

La configuration d'arrivée des cardans étant choisie assez loin d'une singularité, le système de contrôle d'attitude peut compenser ces erreurs sans difficulté par une loi de guidage local classique de la grappe. Même au bout de plusieurs manoeuvres, les excursions des positions cardans autour de la configuration de consigne restent limitées et la grappe peut être ramenée en configuration canonique lors de phases de désaturation en période de veille.

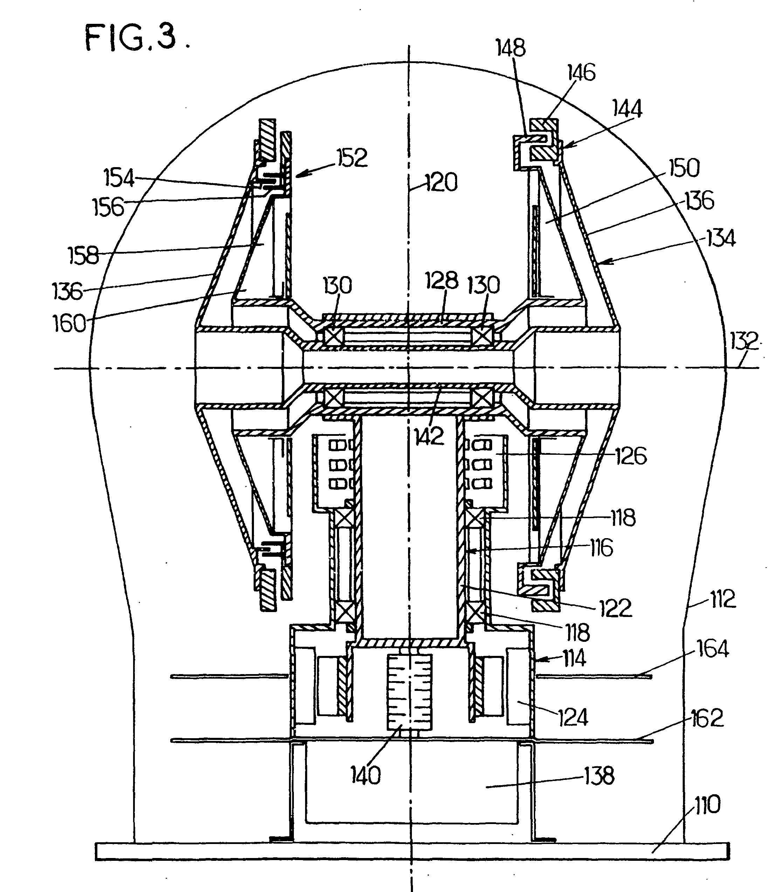

Chacune des gyrodynes peut avoir la constitution montrée en figure 3. Le gyrodyne comporte alors une embase 110 qui définit, avec une enveloppe étanche 112, un volume dans lequel est placé l'ensemble de l'actionneur. Sur l'embase est fixé un mécanisme de basculement ayant une partie statorique 114 et une partie rotorique qui constitue un support 116. La partie statorique 114 est constituée par un manchon dans lequel sont placés des moyens de guidage (roulement à billes par exemple) 118 espacés l'un de l'autre de façon à donner une orientation précise à un axe de basculement 120 autour duquel tourne un tube 122 appartenant au support.

Les parties statorique et rotorique comportent également les composants d'un moteur couple à commutation électronique 124, ayant des aimants permanents sur la partie rotorique.

Les passages de courant électrique entre les parties rotorique et statorique peuvent être effectués par des connecteurs tournants 126 à bague et balais, représentés au nombre de trois sur la figure.

La position angulaire du support ou partie rotorique est donnée à tout instant par un codeur 138 présentant une partie fixée rigidement à la partie statorique 114 et un rotor relié au tube 122 par un accouplement élastique 140.

On peut notamment utiliser un codeur optique, à sortie incrémentale sous forme de signaux en quadrature. Ces signaux peuvent être traités par une électronique de proximité capable de fonctionner en modes périodemètre, pour le pointage fin, et fréquencemètre, lors des basculements à vitesse rapide.

Les signaux de sortie du codeur peuvent être utilisés dans plusieurs boucles de régulation et de mesure :

- une boucle d'auto-pilotage du moteur effectuant la commutation des phases et le contrôle des courants de phase en fonction de la position instantanée ;
- mesure de l'orientation de la toupie, et de contrôle de la vitesse instantanée de basculement pour le contrôle du couple généré sur le satellite.

A l'extrémité du tube 116 est fixée une douille 128 portant des guidages 130 qui définissent l'axe 132 de rotation d'une toupie 134 pouvant être regardée comme comportant deux flasques 136 reliés par un arbre creux 142.

Cette disposition permet de choisir le diamètre des roulements 130 de façon à assurer le meilleur compromis possible entre la tenue mécanique lors du lancement et après une durée de vie importante en orbite, un couple visqueux résistif acceptable et une fréquence propre de flexion de l'arbre hors du domaine de fréquence parasite susceptible d'être appliquée. Pour éviter la pollution de l'intérieur de l'enveloppe 112, les roulements à billes peuvent être munis de chicanes qui évitent que de l'huile déposée localement ne s'échappe.

La toupie est entraînée en rotation à une vitesse élevée, généralement constante. Un moteur d'entraînement de la toupie comporte, dans le cas présenté sur la figure, un moteur couple 144 sans balais et sans fer, généralement à commutation électronique, dont le couple compense les dissipations d'énergie par frottement. Il peut comporter généralement un rotor annulaire passif appartenant à la périphérie d'un des flasques 136 et un enroulement 148 alimenté par l'intermédiaire des connecteurs tournants 126 et fixé à une jante 158 parallèle au flasque et solidaire de la douille 128. L'électronique 150 de commande et de régulation de vitesse du moteur 144 peut être placée sur une ou des cartes à circuit imprimé insérées à l'intérieur de la jante 158 parallèle au flasque qui est muni du moteur, et à laquelle on peut donner une forme en champignon.

La vitesse de rotation est mesurée par un tachymètre 152 ayant une couronne 154 fixée à l'autre flasque 136 et une partie active 156 appartenant à une seconde jante 158, similaire à celle qui supporte l'enroulement 148. La seconde jante peut contenir une carte 160 de traitement des signaux fournis par le tachymètre, reliée à l'extérieur par l'un des connecteurs tournant 126.

Le tachymètre 152 est avantageusement sans contacts. On peut notamment utiliser un tachymètre ayant des coupleurs opto-électroniques. Chaque coupleur comporte par exemple au moins une diode électroluminescente et au moins un phototransistor porté par la jante, coopérant avec la couronne annulaire 154 qui présente une alternance de zones de transmission et d'occultation d'un faisceau entre la diode électro-luminescente et le phototransistor.

Les moyens d'alimentation des moteurs 144 à partir d'une source électrique extérieure non représentée peuvent être montés sur une carte 162 placée autour de la base de la partie statorique 114. Les moyens d'alimentation du moteur de basculement 124 peuvent être placés sur une autre carte 164. Des connexions avec l'extérieur, non représentées, permettent de commander le basculement à partir d'un circuit extérieur.

**Revendications**

1. Procédé de contrôle de l'attitude d'un satellite, par commande de la vitesse des cardans de gyrodynes d'une grappe de gyrodynes, ayant des toupies respectives montées sur des cardans rotatifs sur une plate-forme du satellite, autour d'axes d'orientations différentes, suivant lequel :

- on détermine, à partir des conditions initiales d'attitude et de vitesse angulaire du satellite à partir des conditions finales désirées en terme d'attitude et de vitesse angulaire du satellite, et à partir d'une durée de temps allouée au passage des conditions initiales aux conditions finales, ce passage étant appelé manoeuvre, une configuration de grappe, dite configuration de consigne, éloignée de toute configuration singulière telle que l'échange de moment cinétique entre la grappe de gyrodynes et le satellite pendant une durée impartie provoque la manoeuvre d'attitude désirée,

- on amène, de façon simultanée et indépendante, l'orientation de chaque cardan dans son orientation de consigne grâce à une consigne de position angulaire envoyée en boucle ouverte dans l'asservissement local en position angulaire des cardans.

2. Procédé selon la revendication 1, **caractérisé en ce qu'**on provoque la montée en vitesse de façon quasi instantanée en regard du temps de réponse de l'asservissement d'un système général de contrôle d'attitude.

3. Procédé selon la revendication 1 ou 2, **caractérisé en ce qu'**on limite l'action du système général de contrôle d'attitude du satellite pendant la reconfiguration de grappe.

4. Procédé selon la revendication 3, **caractérisé en ce qu'**on limite l'action par saturation ou filtrage du couple de contrôle demandé par le système de contrôle d'attitude.

5. Procédé selon l'une quelconque des revendications 1 à 4, **caractérisé en ce que** la grappe est composée de gyrodynes 1-axe.

6. Procédé selon la revendication 5, **caractérisé en ce que**, la grappe étant composée de quatre gyrodynes au moins, on choisit pour configuration de consigne, parmi les configurations possibles de la grappe, celle qui optimise un critère de choix choisi parmi :

   - Racine carrée du déterminant de (AA') maximal, ce qui revient à une maximisation de la marge par rapport aux singularités, A' étant la matrice jacobienne $(\partial H_i/\partial \sigma_j)$ avec i = 1 à 3 et j = 1 à 4, où $H_i$ désigne la composante d'ordre i du moment cinétique total de la grappe, et $\sigma_j$ est la position angulaire du cardan du gyrodyne d'ordre j ;

   - Minimisation de la norme infinie du vecteur s, où le vecteur s est le vecteur des normes des lignes de $A'(A.A')^{-1}$, ce qui correspond au maximum de la gouvernabilité en couple 3-axes de la configuration d'arrivée ;

   - Norme infinie de $\sigma$ minimale, ce qui correspond à un minimum du temps de reconfiguration de grappe ;

   - Norme 2 de $\sigma$ minimale, ce qui correspond à une reconfiguration à énergie minimale.

7. Procédé selon l'une quelconque des revendications précédentes, **caractérisé en ce qu'**on limite le domaine angulaire de débattement de chaque cardan.

8. Procédé selon la revendication 1, **caractérisé en ce qu'**on réoriente chaque toupie par un moteur pas à pas.

9. Procédé selon la revendication 7, **caractérisé en ce qu'**on fait passer les signaux et la puissance vers le cardan à l'aide d'un faisceau de câbles .

10. Dispositif de pilotage de l'attitude d'un satellite comprenant :

   - une grappe d'au moins trois gyrodynes (10a-10d) pour un pilotage 3 axes ou d'au moins deux gyrodynes pour un pilotage 2 axes ayant des toupies respectives montées sur des cardans rotatifs sur une plate-forme du satellite autour d'axes d'orientations différentes, et **caractérisé en ce qu'**il comprend également

   - des moyens de contrôle agencés pour la mise en oeuvre du procédé selon l'une quelconque des revendications 1 à 9, et déterminer, à partir des conditions initiales d'attitude et de vitesse angulaire du satellite, des conditions finales désirées en terme d'attitude et de vitesse angulaire du satellite, et d'une durée de temps allouée au passage des conditions initiales aux conditions finales, ce passage étant appelé manoeuvre, une configuration de grappe, dite configuration de consigne, éloignée de toute configuration singulière telle que l'échange de moment cinétique entre la grappe de gyrodynes et le satellite pendant une durée impartie provoque la manoeuvre d'attitude désirée et pour commander les moteurs de cardan de façon à amener, de façon simultanée et indépendante, l'orientation de chaque cardan dans son orientation de consigne grâce à une consigne de position angulaire envoyée en boucle ouverte dans l'asservissement local en position angulaire des cardans.

**Patentansprüche**

1. Verfahren zur Kontrolle der Lage eines Satelliten durch Steuerung der Geschwindigkeit von kardanischen Gyrodynen einer Traube von Gyrodynen mit Kreiseln, die jeweils auf drehbaren Kardanen auf einer Plattform des Satellitens um unterschiedliche Orientierungsachsen montiert sind, wobei:

- man auf der Grundlage der anfänglichen Lage und der Winkelgeschwindigkeit des Satelliten, auf der Grundlage der gewünschten Endlage und der Winkelgeschwindigkeit des Satelliten und auf der Grundlage einer eingeräumten Zeitdauer beim Durchgang der anfänglichen Bedingungen zu den Endbedingungen, wobei dieser Durchgang Manöver genannt wird, eine Konfiguration der Traube bestimmt, besagte Konfiguration der Anweisung, entfernt von der gesamten singulären Konfiguration sowie den Austausch des Drehimpulses zwischen der Traube der Gyrodynen und dem Satelliten, während eine zugeteilte Dauer das gewünschte Lagemanöver hervorruft,
- entsprechend simultan und unabhängig führt man die Orientierung jedes Kardans in seiner Ausrichtung gemäß Anweisung herbei dank einer Winkelpositionsanweisung, in offener Schleife der lokalen Steuerung in der Winkelposition der Kardane übermittelt.

2. Verfahren nach Anspruch 1,
   **dadurch gekennzeichnet,**
   **daß** man das Hochlaufen beinah sofort gegenüber der Ansprechzeit des Steuerns eines gesamten Systemes der Lagekontrolle hervorruft.

3. Verfahren nach Anspruch 1 oder 2,
   **dadurch gekennzeichnet,**
   **daß** man die Aktion der allgemeinen Lagekontrolle des Satelliten während der Rekonfiguration der Traube eingrenzt.

4. Verfahren nach Anspruch 3,
   **dadurch gekennzeichnet,**
   **daß** man die Aktion durch Sättigung oder Filtern des Kontrollmomentes begrenzt, erfordert vom System der Lagekontrolle.

5. Verfahren nach einem der Ansprüche 1 bis 4,
   **dadurch gekennzeichnet,**
   **daß** die Traube von 1-achsigen Gyrodynen gebildet wird.

6. Verfahren nach Anspruch 5,
   **dadurch gekennzeichnet,**
   **daß** man, wobei die Traube von wenigstens vier Gyrodynen gebildet wird, zur Anweisungskonfiguration unter den möglichen Konfigurationen der Traube diejenige wählt, die ein Auswahlkriterium optimiert ausgewählt unter:

   - Quadratwurzel der Determinante von (AA') maximal, was hinausläuft auf eine Maximierung der Spanne in bezug auf Singularitäten, wobei A' eine jakobische Matrix ($\delta H_i/\delta\sigma_j$) mit i = 1 bis 3 und j = 1 bis 4 ist, wobei $H_i$ die Komponente der Ordnung i des gesamten Drehimpulses der Traube bestimmt, und $\sigma_j$ die Winkelposition des Kardans des Gyrodyn der Ordnung j ist;

- Minimierung der infiniten Norm des Vektors s, wobei der Vektor s der Vektor der Liniennormen von A' (A.A')$^{-1}$ ist, was dem Maximum der Lenkbarkeit des 3-achsigen Momentes der Anfangskonfiguration entspricht;
- infinite Norm von $\sigma$ minimal, was einem Minimum an Rekonfigurationszeit der Traube entspricht;
- Norm 2 von $\sigma$ minimal, was einer Rekonfiguration von minimaler Energie entspricht.

7. Verfahren nach einem der vorangehenden Ansprüche,
   **dadurch gekennzeichnet,**
   **daß** man den Winkelbereich des Ausschlages jedes Kardans beschränkt.

8. Verfahren nach Anspruch 1,
   **dadurch gekennzeichnet,**
   **daß** man jeden Kreisel mittels eines Motors Schritt für Schritt reorientiert.

9. Verfahren nach Anspruch 7,
   **dadurch gekennzeichnet,**
   **daß** man die Signale und Kraft auf das Kardan mit Hilfe eines Kabelbündels leiten läßt.

10. Vorrichtung zur Steuerung der Lage eines Satelliten mit:

    - einer Traube von wenigstens drei Gyrodynen (10a-10d) für eine 3-achsige Steuerung oder wenigstens zwei Gyrodynen für eine 2-achsige Steuerung, die Kreisel aufweisen, jeweils auf rotierbaren Kardanen auf einer Plattform des Satelliten um unterschiedliche Ausrichtungsachsen montiert und **dadurch gekennzeichnet, daß** sie in gleicher Weise umfaßt:

    - Kontrollmittel, die eingerichtet sind, um das Verfahren nach einem der Ansprüche 1 bis 9 durchzuführen und bestimmt sind auf der Grundlage der anfänglichen Lage und der Winkelgeschwindigkeit des Satellitens, der gewünschten Endlage und der Winkelgeschwindigkeit des Satellitens auf der Grundlage einer eingeräumten Zeitdauer beim Durchgang der anfänglichen Bedingungen zu den Endbedingungen, wobei dieser Durchgang Manöver genannt wird, eine Konfiguration der Traube, welche die Konfiguration der Anweisung, entfernt von der gesamten singulären Konfiguration sowie dem Austausch des Drehimpulses zwischen der Traube der Gyrodynen und dem Satelliten während eine zugeteilte Dauer das gewünschte Lagemanöver hervorruft, und zum Betätigen der Motoren des Kardans, um simultan und unabhängig die Orientierung jedes Kardans hervorzurufen auf seiner ihm zugewiesenen Orientierung dank einer Winkelpositionsanweisung, in offener Schleife der lokalen Steuerung in der Winkelposition der Kardane übermittelt.

## Claims

1. A method of controlling the attitude of a satellite by controlling the speed of the gimbals of CMGs in a cluster of CMGs, the CMG having respective wheels mounted on gimbals that are mounted on a satellite platform to rotate about different orientation axes, the method comprising the steps of:

   · on the basis of starting conditions relating to attitude and angular speed of the satellite, on the basis of desired end conditions in terms of attitude and angular speed of satellite, and on the basis of a time duration allocated to the passage from the starting conditions to the end conditions, said passage being named maneuver, determining a cluster configuration named reference configuration that is remote from any singular configuration such that exchanging angular momentum between the cluster of CMGs and the satellite during a given length of time will give rise to the desired attitude maneuver; and
   · bringing the orientation of each gimbal in simultaneous and independent manner into its reference orientation by using an angular position reference applied in an open loop in the local servo-control of the angular positions of the gimbals.

2. A method according to claim 1, **characterized in that** acceleration is caused to take place almost instantaneously relative to the response time of a general attitude servo-control system.

3. A method according to claim 1 or 2, **characterized in that** an action of the general attitude control system for the satellite is limited while the cluster is being reconfigured.

4. A method according to claim 3, **characterized in that** said action is limited by saturation or filtering the control torque requested by the attitude control system.

5. A method according to any one of claims 1 to 4, **characterized in that** the cluster is made up of single-axis CMGs.

6. A method according to claim 5, **characterized in that** the cluster being made up of at least four CMGs, a reference configuration is selected from the possible configurations for the cluster so as to optimize a
selection criterion selected from:

   · maximizing the square root for the determinant of (AA'), which amounts to maximizing margin relative to singularities, A' being the Jacobian matrix $(\partial H_i/\partial \sigma_j)$ where i=1 to 3 and j=1 to 4; $H_i$ designates the component of order i of the total angular momentum of the cluster, and $\sigma_j$ is the angular position of the gimbal of the CMG of order j;
   · minimizing the infinite norm of the vector s, where the vector $\underline{s}$ is the vector of the norms of the rows of $A'(A.A)^{-1}$, which corresponds to maximum steerability in three-axis torque for the end configuration;
   · Infinite norm of minimum $\sigma$, which corresponds to minimizing cluster reconfiguration time; and
   · norm 2 of minimum $\sigma$, which corresponds to a minimum-energy reconfiguration.

7. A method according to any one of claims 1-6, **characterized in that** the domain of angular excusion of each gimbal is limited.

8. A method according to claim 1, **characterized in that** each wheel is re-oriented by means of a stepper motor.

9. A method according to claim 7, **characterized in that** the signals and power are conveyed to the gimbal by means of a brindle of cables.

10. Apparatus for steering the attitude of a satellite, the apparatus comprising:

    · a cluster of at least three CMGs (10a-10d) for three-axis steering or of at least two CMGs for two-axis steering, the CMGs having respective wheels mounted on gimbals that are mounted on a satellite platform to rotate about different orientation axes; and

    **characterized in that** it further comprises:

    · control means for implementing the method according to any one of claims 1-9, and for determining, on the basis of starting conditions relating to attitude and angular speed of the satellite, on the basis of desired end conditions in terms of attitude and angular speed of the satellite, and on the basis of a time duration allocated to the passage from the starting conditions to the end conditions, said passage being named maneuver to a cluster configuration, named reference configuration that is remote from any singular configuration, such that exchanging angular momentum between the cluster of CMGs and the satellite during a given length of time will give rise to the desired attitude maneuver and to control the gimbal motors in such a manner as to bring the orientation of each gimbal in simultaneous and independent manner into its reference orientation by means of an angular position reference applied in an open loop in the local angular position servo-control of the gimbals.

FIG.1.

FIG.2A.

FIG.2B.

EP 1 002 716 B1

FIG.3.